# FASCICULE DE BREVET EUROPEEN

(11) **EP 0 811 324 B1**
(45) Date de publication et mention de la délivrance du brevet: **13.11.2002**
(21) Numéro de dépôt: 96201596.2
(22) Date de dépôt: 07.06.1996
(51) Int. Cl.: A23G 9/28

(54) **Procédé et dispositif de fabrication de crème glacée contenant des morceaux**
Verfahren und Vorrichtung zur Herstellung von Partikeln enthaltenden Speiseeis
Process and apparatus for making ice creams containing particles

(43) Date de publication de la demande: 10.12.1997
(73) Titulaire: SOCIETE DES PRODUITS NESTLE S.A., 1800 Vevey (CH)
(72) Inventeur: Daouse, Alain, 60430 Noailles (FR)
(74) Mandataire: Archambault, Jean

(56) Documents cités:
- AU-A- 624 256
- FR-A- 1 360 757
- FR-A- 2 022 412
- GB-A- 787 491
- GB-A- 1 169 500
- US-A- 2 246 871
- US-A- 2 313 060
- US-A- 2 479 261
- US-A- 2 774 314
- US-A- 3 014 437
- US-A- 3 181 838
- US-A- 3 830 407
- US-A- 4 332 145
- US-A- 4 447 458

## Description

L'invention a trait à la fabrication de composition glacée destinée au remplissage des pôts ou "vracs" contenant des morceaux.

On sait incorporer et répartir uniformément des morceaux, par exemple de fruits confits ou secs, dans une masse de composition glacée, pour remplir des pôts ou des barquettes dans la fabrication des portions familiales ou vracs. Le dispositif décrit dans DE-A-3521612, par exemple, permet la distribution uniforme de morceaux déjà formés d'une certaine taille dans une veine de crème glacée, depuis une trémie à l'aide d'un tambour rotatif à pales rétractables s'appuyant contre une paroi cylindrique dont le rôle est de charger une quantité constante de morceaux dans un secteur du tambour et de la répartir uniformément dans le flux de crème glacée.

Dans US-A-3014437, par exemple, on co-extrude sous forme de boudins des masses différentes de produits plastiques telles que des masses de crème glacée de parfums différents, puis on les entortille en leur imprimant un mouvement rotatif à l'aide d'une pale tournante en forme de papillon. Un des produits plastiques peut être du fondant.

FR-A-2 022 412 se rapporte à un procédé de production d'inclusions dans un vrac de grème glacée, en fait d'inclusions de gels de fruit imitant des morceaux de fruit (par exemple de fraise) à introduire dans un flux de crème glacée molle. Selon ce procédé, on forme séparément un gel en chauffant un sirop de fruit liquide contenant un agent gélifiant, on le refroidit de manière à transformer le gel en une masse plastique, on extrude la dite masse sous forme de boudins au sein d'une veine de crème glacée par des tubes placés longitudinalement par rapport au flux de crème glacée qui les entoure et on découpe les boudins en aval du lieu de leur introduction au moyen d'un moulin à pales tranchantes.

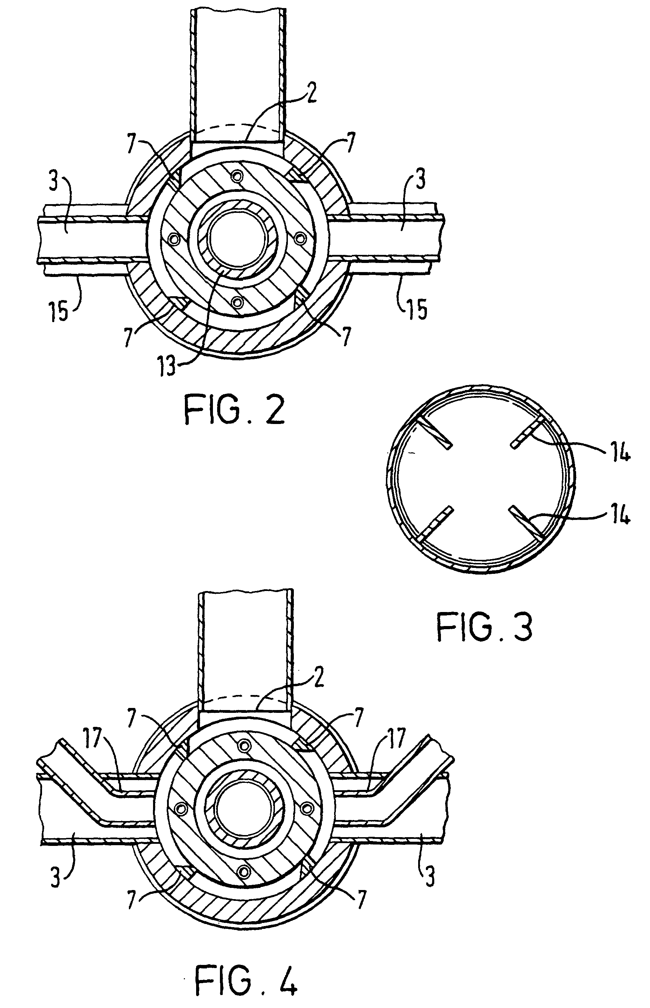

FR-A-1 360 757 concerne un dispositif de dosage et de distribution de portions de glace molle. Dans celui-ci, les portions sont formées dans un logement cylindrique qui comprend une chemise cylindrique 2 munie de lumières latérales 12, 13 et pouvant tourner lentement en contact avec le cylindre autour d'un axe vertical. Les lumières 12, 13, une fois mises en coïncidence avec un ou plusieurs canaux d'alimentation 10, 11 du cylindre permettent de choisir ou de mélanger à volonté des glaces de différents parfums pour former une portion panachée, la chemise 2 agissant à la manière d'un tiroir distributeur rotatif (colonne 1, dernier paragraphe à colonne 2, ligne 5). La portion est expulsée par un piston vertical 7 coulissant dans la chemise 2 à travers un ajutage de sortie 9 (figures 2, 3 et 4).

GB-A-1 169 500 se rapporte à un appareil pour préparer des crèmes glacées panachées dans lequel jusqu'à trois veines de crèmes glacées de parfums différents sont co-extrudées et torsadées en spirales au moyen d'un joint rotatif (figure 1) et dans la version tri-parfums d'un élément rotatif répartiteur/déflecteur situé à l'intérieur d'une buse d'extrusion (figure 3) dans le but de remplir des pots avec des masses réparties selon des zones procurant un aspect décoratif de bandes torsadées en spirales. L'élément rotatif est cylindrique dans sa partie supérieure et est pourvu de lumières à différents niveaux qui peuvent coïncider avec des conduits d'amenée des crèmes glacées, cependant que dans sa partie inférieure il est muni de plaques déflectrices (figure 3) qui permettent de diviser l'un des flux de crèmes glacées et conduire au produit représenté à la figure 4.

Le but de la présente invention est de doser dans une masse de composition glacée des morceaux de gel sous forme de boudins ou de rondelles et de les répartir de manière aléatoire dans la masse.

L'invention concerne donc un procédé de fabrication de composition glacée destinée au remplissage des pots ou vracs contenant des morceaux de gel, caractérisé par le fait que l'on forme un gel en boudins, qu'on les améne dans une chambre de mélange cylindrique par des conduits d'amenée disposés latéralement par rapport à l'axe de la chambre, qu'on les découpe en tronçons au niveau de la paroi intérieure de la chambre, qu'on les incorpore et qu'on les répartit de manière aléatoire dans une veine de composition glacée amenée latéralement par rapport à l'axe de la chambre en continu et en une seule opération.

Selon l'invention, on entend par "composition glacée" une crème glacée ou un sorbet, plus ou moins aéré ou foisonné.

Dans le contexte de l'invention, un gel est constitué d'une composition aqueuse contenant du sucre, des polysaccharides gélifiants tels que, par exemple la gomme de caroube ou les carraghénanes et le cas échéant des arômes et colorants, par exemple de fruits.

On prépare un tel gel par mélange à chaud, par exemple à 60-80° C d'eau, de sucre, de polysaccharides gélifiants, le cas échéant de colorants et d'arômes, puis on pompe ce mélange dans une tubulure et on le refroidit à environ 10-15° C, de manière qu'il soit encore pompable.

Dans un mode de réalisation particulier de l'invention, on forme le gel en un boudin creux, au centre duquel on dose une autre composition de caractéristiques rhéologiques différentes de celles du gel, plus dure à température basse, par exemple un fondant, une pâte sucrée ou une masse grasse, par exemple de chocolat au moyen d'un tube co-axial. On introduit cette composition à température plus élevée que celle du gel, par exemple à environ 40-60° C. De cette manière, on peut réaliser une gaine de gel entourant la veine de composition dure, qui peut être incorporée, par voie indirecte, dans la masse de composition glacée. Sans cette gaine, on ne pourrait pas introduire la composition en question qui figerait et obstruerait rapidement le tube d'amenée au contact de la masse froide de composition glacée. Une fois découpé, le boudin bi-composants se présente sous forme de morceaux, par exemple de rondelles d'aspect décoratif.

Dans le terme "rondelle", on englobe bien entendu d'autres contours que circulaire, dans la mesure où le contour est dicté par la configuration de l'ajutage terminant la tubulure d'amenée du gel. Ce contour peut définir, par exemple, une fente, un polygone, tel qu'un rectangle, un carré, un triangle, une étoile, un ovale ou une figurine.

L'invention concerne également un dispositif de dosage en continu de morceaux dans une masse de composition glacée, caractérisé par le fait qu'il comprend:
une chambre de mélange cylindrique,
au moins un tube d'amenée de composition glacée débouchant dans la chambre, latéralement par rapport à l'axe de la chambre,
au moins un tube d'amenée de gel débouchant dans la chambre, latéralement par rapport à l'axe de la chambre, de section inférieure à celle du tube d'amenée de composition glacée,
un outil de découpe des boudins de gel en morceaux, animé d'un mouvement rotatif et ajusté à la paroi intérieure de la chambre de mélange,
des moyens de déflection de la masse longitudinalement par rapport à l'axe de la chambre,
des moyens de répartition des morceaux dans la veine de composition glacée et un ajutage d'extrusion de la composition glacée contenant les morceaux.

Selon un mode de réalisation particulier, l'outil de découpe des boudins de gel est une lanterne cylindrique adaptée à la paroi interne de la chambre, pourvue de larges fenêtres pour le passage des masses et de montants à arête coupante. Le bas de la lanterne est ouvert sur la partie inférieure de la chambre de mélange, de préférence dans l'axe de ladite chambre.

La chambre de mélange se prolonge en aval de l'outil de coupe et se termine par l'ajutage de sortie. De préférence, des tubes d'amenée supplémentaires de composition glacée sont disposés latéralement en aval de l'outil de découpe.

De préférence, des éléments déflecteurs sont disposés à la périphérie de la chambre le long de sa paroi intérieure. Ces éléments assurent une distribution aléatoire des morceaux de gel tout en évitant que ces morceaux ne soient distribués en tas dans la masse de composition glacée.

L'invention sera mieux comprise à l'aide des dessins annexés à titre d'exemple et dans lesquels:

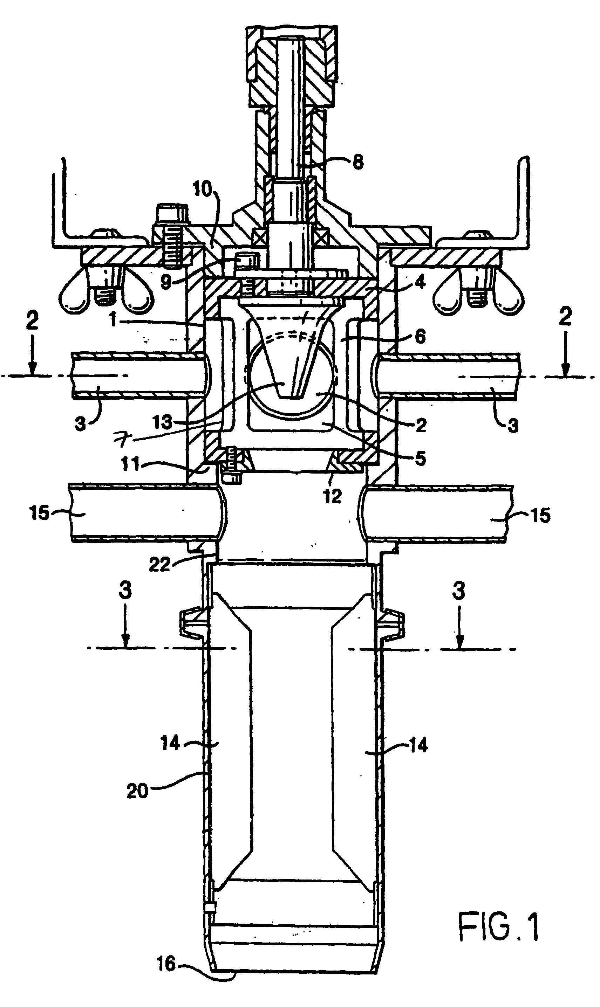

La figure 1 est une vue en coupe longitudinale d'un mode de réalisation du dispositif,
la figure 2 est une coupe selon AA de la figure 1,
la figure 3 est une coupe selon BB de la figure 1 et
la figure 4 est une vue en coupe, au même niveau que AA de la figure 1, d'une variante du dispositif avec incorporation de gel composite.

Comme montré aux figures 1 à 3, le dispositif comprend une chambre de mélange 1, cylindrique. La composition glacée est amenée depuis l'arrière par l'ouverture 2, par exemple à environ -5 à -7° C, au moyen d'une pompe non représentée. Le gel refroidi à environ 15° C est amené de chaque côté vers la chambre 1 par les tubes 3. Dans la partie supérieure de la chambre 1 est disposée une lanterne 4 pourvue de larges fenêtres 5 et de montants 6. Les montants 6 ont des arêtes coupantes 7.

La lanterne 4 est mise en rotation au moyen de l'arbre 8, auquel elle est fixée par les boulons 9, par l'intermédiaire d'un moteur à vitesse variable non représenté, et tourne entre les paliers 10 et 11. Les flux de composition glacée et de gel sont déviés vers le passage 12 à la sortie de la lanterne 4 sous l'effet du déflecteur 13 en forme de tronc de cône, et cheminent de là dans la partie inférieure de la chambre 1. Des éléments 14 sont disposés à la périphérie de la chambre 1, le long de sa paroi intérieure. Les éléments 14 fonctionnent comme mélangeur statique pour répartir les flux de composition glacée contenant les morceaux de gel.

Les tubes 15, disposés latéralement par rapport à la chambre, servent amener des flux supplémentaires de composition glacée. La chambre 1 débouche sur l'ajutage de sortie 16 du mélange de composition glacée contenant les morceaux de gel.

A la figure 4, les tubes 3 d'amenée du gel contiennent des tubulures 17, coaxiales au niveau de l'amenée et de section plus petite, ce qui permet d'introduire dans le dispositif par co-extrusion, des veines composites de gel contenant un centre, par exemple de chocolat. Les gaines de gel assurent un isolement thermique de la veine de chocolat qui permet le tranport d'un boudin composite vers la chambre sans risque d'obstruction des tubes d'amenée 3.

## Revendications

1. Procédé de fabrication de composition glacée destinée au remplissage des pots ou vracs contenant des morceaux de gel, **caractérisé par le fait que** l'on forme un gel en boudins, qu'on les amène dans une chambre de mélange cylindrique par des conduits d'amenée disposés latéralement par rapport à l'axe de la chambre, qu'on les découpe en tronçons au niveau de la paroi intérieure de la chambre, qu'on les incorpore et qu'on les répartit de manière aléatoire dans une veine de composition glacée amenée latéralement par rapport à l'axe de la chambre en continu et en une seule opération.

2. Procédé selon la revendication 1, **caractérisé par le fait que** le gel est constitué d'une composition aqueuse contenant du sucre, des polysaccharides gélifiants, notamment la gomme de caroube ou les carraghénanes et le cas échéant des arômes et colorants, notamment de fruits.

3. Procédé selon la revendication 1, **caractérisé par le fait que** l'on prépare un tel gel par mélange à chaud, à 60-80° C, d'eau, de sucre, de polysaccharides gélifiants, le cas échéant de colorants et d'arômes, puis on pompe ce mélange dans une tubulure et on le refroidit à 10-15° C, de manière qu'il soit encore pompable.

4. Procédé selon la revendication 1, **caractérisé par le fait que** l'on forme le gel en un boudin creux, au centre duquel on dose une autre composition différente d'un gel, notamment un fondant, une pâte sucrée ou une masse grasse, particulièrement de chocolat, au moyen d'un tube co-axial dans lequel on introduit cette composition à température plus élevée que celle du gel, notamment à 40-60° C et que l'on réalise une gaine de gel entourant la veine de composition dure, qui peut être incorporée, par voie indirecte, dans la masse de composition glacée.

5. Procédé selon la revendication 1, **caractérisé par le fait que** le boudin de gel est de section circulaire ou a un contour autre que circulaire, dans la mesure où le contour est dicté par la configuration de l'ajutage terminant la tubulure d'amenée du gel, pouvant définir, une fente, un polygone, notamment un rectangle, un carré, un triangle, une étoile, un ovale ou une figurine.

6. Dispositif de dosage en continu de morceaux dans une masse de composition glacée, **caractérisé par le fait qu'**il comprend:
une chambre de mélange cylindrique,
au moins un tube d'amenée de composition glacée débouchant dans la chambre, latéralement par rapport à l'axe de la chambre,
au moins un tube d'amenée de gel débouchant dans la chambre, latéralement par rapport à l'axe de la chambre, de section inférieure à celle du tube d'amenée de composition glacée,
un outil de découpe des boudins de gel en morceaux, animé d'un mouvement rotatif et ajusté à la paroi intérieure de la chambre de mélange,
des moyens de déflection de la masse longitudinalement par rapport à l'axe de la chambre,
des moyens de répartition des morceaux dans la veine de composition glacée et un ajutage d'extrusion de la composition glacée contenant les morceaux.

7. Dispositif selon la revendication 6, **caractérisé par le fait que** l'outil de découpe des boudins de gel est une lanterne cylindrique adaptée à la paroi interne de la chambre, pourvue de larges fenêtres pour le passage des masses et de montants à arête coupante.

8. Dispositif selon la revendication 6, **caractérisé par le fait que** la chambre de mélange se prolonge en aval de l'outil de coupe et se termine par l'ajutage de sortie.

9. Dispositif selon la revendication 6, **caractérisé par le fait que** des tubes d'amenée supplémentaires de composition glacée sont disposés latéralement en aval de l'outil de découpe.

10. Dispositif selon la revendication 6, **caractérisé par le fait que** le bas de la lanterne est ouvert sur la chambre et que des éléments déflecteurs sont disposés à la périphérie de la chambre le long de sa paroi intérieure, et que lesdits éléments assurent une distribution aléatoire des morceaux de gel tout en évitant que ces morceaux ne soient distribués en tas dans la masse de composition glacée.

11. Dispositif selon la revendication 6, **caractérisé par le fait que** les tubes d'amenée du gel contiennent des tubulures coaxiales au niveau de l'amenée et de section plus petite, ce qui permet d'introduire dans le dispositif par co-extrusion, des veines composites de gel contenant un centre, notamment de chocolat.

12. Composition glacée contenant des morceaux de fondant, de pâte sucrée ou de masse grasse, notamment de chocolat, sous forme de boudins ou de rondelles entourés d'une gaine de gel.

## Patentansprüche

1. Verfahren zur Herstellung einer Gelstücke enthaltenden Speiseeiszusammensetzung zum Füllen von Bechern oder als Einzelportionen, **dadurch gekennzeichnet, dass** man Gel zu Strängen formt, dass man diese über bezüglich der Achse der Kammer seitlich angeordnete Zufuhrkanäle in eine zylindrische Mischkammer einbringt, dass man sie auf Höhe der Innenwand der Kammer in Stücke schneidet, dass man diese in die Ader einer Speiseeiszusammensetzung, die bezüglich der Achse der Kammer seitlich zugeführt wird, kontinuierlich und in einem einzigen Arbeitsgang einarbeitet und in dieser zufällig verteilt.

2. Verfahren nach Anspruch 1, **dadurch gekennzeichnet, dass** das Gel aus einer wässrigen Zusammensetzung besteht, die Zucker, gelierende Polysaccharide, insbesondere Johannisbrotmehl oder Carageenane, und ggf. Aromastoffe und Farbstoffe, insbesondere Früchte, enthält.

3. Verfahren nach Anspruch 1, **dadurch gekennzeichnet, dass** man ein solches Gel durch Mischen von Wasser, Zucker, gelierenden Polysacchariden, ggf. Farbstoffen und Aromastoffen in der Wärme bei 60-80°C herstellt, diese Mischung in ein Rohr pumpt und sie so auf 10-15°C kühlt, dass sie noch pumpfähig ist.

4. Verfahren nach Anspruch 1, **dadurch gekennzeichnet, dass** man das Gel zu einem hohlen Strang formt, in dessen Zentrum man eine andere von einem Gel abweichende Zusammensetzung, insbesondere ein Fondant, eine süße Paste oder Fettmasse, insbesondere Schokolade, mit Hilfe eines koaxialen Rohrs zudosiert, in dem man diese Zusammensetzung bei einer Temperatur, die höher als die des Gels ist, insbesondere bei 40-60°C einführt, und dass man eine die Ader aus der harten Zusammensetzung umgebende Gelhülle herstellt, die auf indirektem weg in die Masse der Speiseeiszusammensetzung eingearbeitet werden kann.

5. Verfahren nach Anspruch 1, **dadurch gekennzeichnet, dass** der Gelstrang einen kreisförmigen Querschnitt oder einen anderen als kreisförmigen Umriss hat, wobei der Umriss durch die Konfiguration der am Ende des Gel-Zufuhrrohrs vorgesehenen Düse bestimmt wird, die einen Schlitz, ein Vieleck, insbesondere ein Rechteck, ein Quadrat, ein Dreieck, einen Stern, ein Oval oder eine Figur bilden kann.

6. Vorrichtung zum kontinuierlichen Zudosieren von Stücken in eine Masse einer Speiseeiszusammensetzung, **dadurch gekennzeichnet, dass** sie folgendes umfasst:
eine zylindrische Mischkammer,
mindestens ein bezüglich der Achse der Kammer seitlich in die Kammer mündendes Zufuhrrohr für eine Speiseeiszusammensetzung, mindestens ein bezüglich der Achse der Kammer seitlich in die Kammer mündendes Zufuhrrohr für ein Gel, dessen Querschnitt kleiner als der des Zufuhrrohrs für die Speiseeiszusammensetzung ist,
ein Werkzeug zum Zerschneiden der Gelstränge in Stücke, das in eine Drehbewegung versetzt wird und das an die Innenwand der Mischkammer angepasst ist,
Mittel zum Ablenken der Masse in Längsrichtung bezüglich der Achse der Kammer,
Mittel zur Verteilung der Stücke in der Ader der Speiaeeiszusammensetzung sowie eine Düse zur Extrusion der die Stücke enthaltenden Speiseeiszusammensetzung.

7. Vorrichtung nach Anspruch 6, **dadurch gekennzeichnet, dass** das Werkzeug zum Zerschneiden der Gelstränge ein an die Innenwand der Kammer angepasster zylindrischer laternenförmiger Einsatz ist, der mit breiten Fenstern für den Durchgang der Massen und mit Stegen mit Schneidkante versehen ist.

8. Vorrichtung nach Anspruch 6, **dadurch gekennzeichnet, dass** die Mischkammer stromab des Schneidwerkzeugs verlängert ist und in der Austrittsdüse endet.

9. vorrichtung nach Anspruch 6, **dadurch gekennzeichnet, dass** zusätzliche Rohre für die seitliche Zufuhr einer Speiseeiszusammensetzung stromab des Schneidwerkzeugs angeordnet sind.

10. Vorrichtung nach Anspruch 6, **dadurch gekennzeichnet, dass** der untere Bereich des laternenförmigen Einsatzes kammerseitig offen ist, dass am Umfang der Kammer längs ihrer Innenwand Ablenkorgane angeordnet sind und dass diese Elemente eine zufällige Verteilung der Gelstücke gewährleisten und verhindern, dass sie in der Masse der Speiseeiszusammensetzung in Haufen verteilt werden.

11. Vorrichtung nach Anspruch 6, **dadurch gekennzeichnet, dass** die Zufuhrrohre für das Gel auf Höhe des Eintritts koaxiale Stutzen kleineren Querschnitts enthalten, was die Einführung von gemischten Geladern, die einen Kern insbesondere aus Schokolade enthalten, in die Vorrichtung durch Koextrusion gestattet.

12. Speiseeiszusammensetzung, die Stücke aus Fondant, süßer Paste oder Fett, insbesondere Schokolade, in Form von Strängen oder Scheiben, die mit einer Gelhülle umgeben sind, enthält.

## Claims

1. Process for manufacturing a frozen composition designed to fill pots or bulk cartons containing pieces of gel, **characterized in that** a gel is formed into ropes, that they are fed into a cylindrical mixing chamber by supply conduits positioned laterally with respect to the axis of the chamber, that they are cut up into lengths in the region of the inner wall of the chamber, that they are incorporated and distributed in a random manner in a vein of frozen composition led laterally with respect to the axis of the chamber continuously and in a single operation.

2. Process according to claim 1, **characterized in that** the gel consists of an aqueous composition containing sugar, polysaccharide gelling agents, in particular carob gum or carrageenins and optionally flavours and colorants, notably fruit flavours and colorants.

3. Process according to claim 1, **characterized in that** such a gel is prepared by hot mixing, at 60-80°C, water, sugar, polysaccharide gelling agents and optionally colorants and flavours, and this mixture is then pumped through a pipe and is cooled to around 10-15°C, so that it can still be pumped.

4. Process according to claim 1, **characterized in that** the gel is formed of a hollow rope, at the centre of which is metered another composition different from a gel, notably a fondant, a sweetened paste or a fatty material, particularly of chocolate, by means of a coaxial tube into which this composition is introduced at a higher temperature than that of the gel, in particular at around 40-60°C, and that a sheath of gel is formed surrounding the vein of hard composition, which may be incorporated directly into the mass of frozen composition.

5. Process according to claim 1, **characterized in that** the gel rope has a circular section or has a contour other than circular, in as much as the contour is dictated by the configuration of the nozzle at the end of the tube supplying the gel, which may define a slit, a polygon, in particular a rectangle, a square, a triangle, a star, an oval or a figurine.

6. Device for continuously metering pieces into a mass of frozen composition, **characterized in that** it comprises :
a cylindrical mixing chamber,
at least one tube supplying the frozen composition, discharging into the chamber, laterally with respect to the axis of the chamber,
at least one tube supplying the gel discharging into the chamber, laterally with respect to the axis of the chamber, having a cross section smaller than that of the tube supplying the frozen composition,
a tool for cutting up the gel ropes into pieces, provided with a rotating movement and matching the inner wall of the mixing chamber,
means for deflecting the mass longitudinally with respect to the axis of the chamber,
means for distributing the pieces in the vein of frozen composition and,
a nozzle for extruding the frozen composition containing pieces.

7. Device according to claim 6, **characterized in that** the tool for cutting up the gel ropes is a cylindrical lantern ring matching the inner wall of the chamber, provided with large windows for the passage of the masses and with vertical members having a cutting edge.

8. Device according to claim 6, **characterized in that** the mixing chamber is extended downstream from the cutting tool and ends in the outlet nozzle.

9. Device according to claim 6, **characterized in that** supplementary supply tubes for the frozen composition are arranged laterally downstream from the cutting tool.

10. Device according to claim 6, **characterized in that** the bottom of the lantern ring is open over the chamber and that deflecting elements are arranged at the periphery of the chamber along its inner wall, and that the said elements ensure a random distribution of the pieces of gel while preventing these pieces from being distributed in a heap in the mass of frozen composition.

11. Device according to claim 6, **characterized in that** the tubes supplying the gel contain coaxial pipes in the region of the supply and which have a smaller cross section, which makes it possible to introduce into the device, by coextrusion, composite veins of gel containing a centre, in particular of chocolate.

12. Frozen composition containing pieces of fondant, sweetened paste or a fatty mass, in particular chocolate, in the form of ropes or rings surrounded by a sheath of gel.
